# EUROPÄISCHE PATENTANMELDUNG

(11) **EP 1 213 262 A1**
(43) Veröffentlichungstag der Anmeldung: **12.06.2002**
(21) Anmeldenummer: 00126387.0
(22) Anmeldetag: 02.12.2000
(51) Int. Cl.: C01B 15/013

(54) **Verfahren zur Herstellung von höchstkonzentriertem Wasserstoffperoxid und hiermit erhältliches mindestens 99,9 gew.-%iges Wasserstoffperoxid**

(71) Anmelder: Degussa AG, 40474 Düsseldorf (DE)
(72) Erfinder: Nordhoff, Dr.Stefan, 45657 Recklinghausen (DE); Creutz, Dr. Matthias, 60385Frankfurt (DE); Gross, Stefan, 63505 Langenselbold (DE); Wagner, Dr. Rudolf, 63538 Grosskrotzenburg (DE)

(57) **Zusammenfassung**

Die Erfindung betrifft ein Verfahren zur kontinuierlichen Herstellung von höchstkonzentriertem Wasserstoffperoxid mit einem Gehalt von größer 80 Gew.-%, insbesondere über 98 Gew-% durch Suspensionskristallation und eine Nachbehandlung der H₂O₂-Kristalle.

Erfindungsgemäß wird die Nachbehandlung als Gegestromwäsche in einer hydraulischen oder mechanischen Waschkolonne mit einem gepackten Kristallbett durchgeführt.

Erfindungsgegenstand ist auch Wasserstoffperoxid mit einer Konzentration von 99,9 bis 100 Gew.-% und einem Gehalt von TOC, Nitrat, Phosphat, Nickel und Zinn von jeweils weniger als 4 mg/l.

## Beschreibung

Die Erfindung richtet sich auf ein Verfahren zur Herstellung von höchstkonzentriertem Wasserstoffperoxid der Konzentration c_{P} aus wässrigem Wasserstoffperoxid der Konzentration c_{E}, wobei c_{E} mindestens 80 Gew.-% beträgt und c_{P} größer als c_{E} ist, umfassend eine kontinuierliche Suspensionskristallisation mit nachgeschalteter Wäsche des auskristallisierten Wasserstoffperoxids. Das Verfahren richtet sich insbesondere auf die Gewinnung von über 98 gew.-%igem Wasserstoffperoxid aus etwa 90 gew.-%igem Wasserstoffperoxid sowie auf verfahrensgemäß erhältliches mindestens 99,9 gew.-%iges Wasserstoffperoxid höchster Reinheit.

Bei den bekannten Verfahren zur Herstellung von Wasserstoffperoxid, wie dem Anthrachinonkreisprozess, elektrolytischen Verfahren und Direktsyntheseverfahren, fällt Wasserstoffperoxid in Form einer wässrigen Lösung an. Um derartige Lösungen in marktfähige Produkte zu überführen, schließt sich an die Herstellung üblicherweise eine Konzentrierung der Lösung durch Destillation an. Durch Destillation lassen sich wässrige Wasserstoffperoxidlösungen mit einem Gehalt bis zu etwa 90 Gew.-% Wasserstoffperoxid gewinnen. Einer weiteren destillativen Konzentrierung stehen Kosten- und Sicherheitsüberlegungen entgegen.

Höher konzentriertes Wasserstoffperoxid, also Produkte mit einem H₂O₂-Gehalt im Bereich von gleich/größer 90 Gew.-% bis etwa 98 Gew.-% gewinnen aufgrund ihres hohen Energieinhalts sowie ihrer hohen Reinheit zunehmend technische Bedeutung. Es ist bekannt, dass Wasserstoffperoxid durch mehrfaches Umkristallisieren konzentriert werden kann. Wesentliche Aspekte zur Kristallisation von Wasserstoffperoxid sowie das Fest-Flüssig-Phasendiagramm des Systems Wasserstoffperoxid/Wasser sind aus dem Fachbuch "Hydrogen Peroxide" von Walter C. Schumb et al., Reinhold Publishing Corp. (1955), S. 210-220 bekannt. Hiernach ist eine herausragende Eigenschaft von hochkonzentriertem wässrigen Wasserstoffperoxid die Neigung zur extremen Unterkühlung, wodurch die Konzentrierung durch Kristallisation erschwert wird. Die Kristallbildung wird nach Schumb et al. (Seite 215) weder durch Rühren oder Kratzen noch durch die Abkühlgeschwindigkeit in reproduzierbarer Weise beeinflusst. Das Gefrieren von unterkühltem hochkonzentrierten Wasserstoffperoxid wird jedoch durch Animpfen mit Wasserstoffperoxidkristallen induziert. Als Nachteil einer Konzentrierung durch Kristallisation wird die geringe Effizienz einer fraktionierenden batch-Kristallisation angesehen (Schumb et al., S. 215), da pro Kristallisationsstufe nur eine Konzentrationssteigerung von etwa 2 % und niemals mehr als 4 % erreicht wird. Offensichtlich resultiert dieses Problem aus der hohen Randlöslichkeit, also Mischkristallbildung, von Wasser in kristallisiertem Wasserstoffperoxid, welche auch im Phasendiagramm (Schumb, Seite 211) dargestellt ist. Aufgrund dieser Randlöslichkeit war es nach den Erfahrungen der Erfinder der vorliegenden Anmeldung bisher nicht möglich, Wasserstoffperoxid mit einem Gehalt von mindestens 99,9 Gew.-% durch fraktionierende Kristallisation zu gewinnen.

Ein kontinuierliches Verfahren zur Konzentrierung von wässrigen Wasserstoffperoxidlösungen, das auch die Gewinnung von höchstkonzentriertem Wasserstoffperoxid ermöglicht, lehrt die DE-PS 10 41 479. Die Vorrichtung zur Konzentrierung umfasst hierbei einen Kristallisationsbehälter und eine unmittelbar darunter angeordnete Rektifiziersäule. Das Wasserstoffperoxid-Edukt wird im Kristallisationsbehälter unterkühlt, bis sich ein 2-phasiges System aus einer festen Kristallphase und einer flüssigen Mutterlauge, die sich gemäß dem Gleichgewicht hinsichtlich der Wasserstoffperoxidkonzentration unterscheiden, ausbildet. Die Temperatur längs der Rektifiziersäule wird so geregelt, dass sie vom oberen zum unteren Ende hin langsam ansteigt. Aufgrund der höheren Dichte des kristallisierten Wasserstoffperoxids sinken die Kristalle in der Rektifiziersäule nach unten, wobei bis zum Erreichen des jeweiligen Gleichgewichts ein Fest-Flüssig-Stoffaustausch erfolgt und die H₂O₂-Konzentration in den Kristallen nach unten hin zunimmt; die H₂O₂-Konzentration der Mutterlauge nimmt nach oben hin ab. Aufgrund der nur geringen Dichteunterschiede zwischen dem kristallisierten Wasserstoffperoxid und der Wasserstoffperoxid-Mutterlauge ist das Verfahren durch eine niedrige Raum-Zeit-Ausbeute gekennzeichnet. Ein weiterer sehr erheblicher Nachteil, der einer Übertragung des vorbekannten Verfahrens in einen technischen Maßstab entgegensteht, besteht in den "scale-up"-Problemen (Übertragung des Verfahrens in einen technischen Maßstab): Mit zunehmendem Durchmesser der Rektifiziersäule kommt es zu nicht vorhersehbaren Rückvermischungen, wodurch sowohl die Funktion beeinträchtigt als auch das Verfahrensrisiko erheblich erhöht werden (vergleiche Wellinghoff et al. in Chem.-Ing.-Tech. 63 (1991), 881-882).

Die Rektifiziersäule gemäß DE-PS 10 41 479 wird im Prinzip als Gravitations-Waschkolonne betrieben. Im untersten Teil der Kolonne schmelzen die Kristalle teilweise wieder auf und damit dient die Schmelze als Waschmedium. In derartigen Waschkolonnen erfolgen bei der Gegenstromführung eine Fest-Flüssig-Trennung und weitere Reinigung des Feststoffes in einem Apparat, jedoch bleiben die scale-up-Probleme bestehen, und zwar selbst dann, wenn die Suspensionskristallisation gemäß der nachfolgend beschriebenen Erfindung durchgeführt wird.

Die zuvor aufgezeigten scale-up-Probleme lassen sich, wie dies in der noch nicht publizierten Patentanmeldung DE 100 54 742.7 beschrieben wurde, zwar durch ein Schichtkristallisationsverfahren mit nachgeschaltetem Schwitzprozess vermeiden, dem Vorteil der einfachen und auch im großtechnischen Maßstab unproblematischen Trennung von Feststoff und Flüssigkeit stehen jedoch die Nachteile der diskontinuierlichen Fahrweise, der Mehrstufigkeit und des höheren Energiebedarfs entgegen.

Aufgabe der vorliegenden Erfindung ist es demgemäß, ein kontinuierliches Verfahren zur Herstellung von höchstkonzentriertem Wasserstoff aus mindestens 80 gew.-%igem wässrigen Wasserstoffperoxid aufzuzeigen, das ohne Probleme auch in technischem Maßstab betrieben werden kann. Gemäß einer weiteren Aufgabe der Erfindung sollte es möglich sein, über 98 gew.-%iges, vorzugsweise mindestens 99,9 gew.-%iges Wasserstoffperoxid aus etwa 90 gew.-%igem Wasserstoffperoxid in einer Stufe zu gewinnen. Eine weitere Aufgabe richtet sich darauf, zusätzlich zur Konzentrierung und damit Gewinnung von im wesentlichen wasserfreiem Wasserstoffperoxid auch den Gehalt an Verunreinigungen, wie organischer Kohlenstoff und übliche Stabilisatoren, zu erniedrigen. Übliche Verunreinigungen sind prozessbedingte Nebenbestandteile und während/nach der Herstellung des zu konzentrierenden H₂O₂-Edukts zugesetzte Stabilisatoren. Die genannten Aufgaben lassen sich in einfacher Weise und mit nicht vorhersehbarer hoher Effizienz durch das erfindungsgemäße Verfahren lösen.

Gegenstand der Erfindung ist somit ein Verfahren zur kontinuierlichen Herstellung von höchstkonzentriertem Wasserstoffperoxid der Konzentration c_{P} aus wässrigem Wasserstoffperoxid der Konzentration c_{E}, wobei c_{E} mindestens 80 Gew.-% beträgt und c_{P} größer als c_{E} ist, umfassend eine Suspensionskristallisation des wässrigen Wasserstoffperoxids der Konzentration c_{E} und eine Nachbehandlung der in der Suspension enthaltenden Wasserstoffperoxidkristalle, das dadurch gekennzeichnet ist, dass man die Nachbehandlung als Gegenstromwäsche in einer hydraulischen oder mechanischen Waschkolonne mit einem gepackten Kristallbett durchführt und als Waschmedium Wasserstoffperoxidschmelze der Konzentration c_{P} einsetzt. Die Unteransprüche richten sich auf bevorzugte Ausführungsformen des erfindungsgemäßen Verfahrens.

Das Verfahren ist in besonderer Weise geeignet, wässriges Wasserstoffperoxid mit einer Konzentration c_{E} im Bereich von 85 bis 95 Gew.-%, insbesondere 88 bis 92 Gew.-%, in einer einzigen Stufe zu konzentrieren, vorzugsweise auf eine Konzentration c_{P} von über 98 Gew.-%, insbesondere aber gleich oder mehr als 99,9 Gew.-%. Außer der Konzentrierung des H₂O₂-Edukts wird gleichzeitig der Gehalt an Verunreinigungen auf überraschend niedrige Werte erniedrigt. So lässt sich der TOC-Gehalt (total organic carbon) von beispielsweise 40 bis 50 mg/kg im H₂O₂-Edukt in einer Stufe auf einen Wert von unterhalb etwa 3 mg/l H₂O₂-Produkt reduzieren. Auch der Gehalt an anderen Nebenbestandteilen und Stabilisatoren, wie Phosphat, Zinn und Nitrat, lässt sich auf Werte unterhalb der Nachweisgrenze üblicher Analysenmethoden, im allgemeinen auf Werte unterhalb jeweils 3 mg, insbesondere unterhalb 1 mg/kg H₂O₂-Produkt absenken.

Gegenstand der vorliegenden Erfindung ist demgemäß auch Wasserstoffperoxid mit einer Konzentration von 99,9 bis 100 Gew.-% und einem Gehalt an TOC, Nitrat, Phosphat, Nickel und Zinn von jeweils weniger als 4 mg/l. Vorzugsweise enthält das 99,9 bis 100 gew.-%ige Wasserstoffperoxid weniger als je 1 mg Ni bzw. Sn pro l H₂O₂ und weniger als 2 mg Phosphat pro l H₂O₂.

Das erfindungsgemäß erhältliche im wesentlichen wasserfreie Wasserstoffperoxid mit aussergewöhnlich niedrigem Gehalt an Verunreinigungen lässt sich beispielsweise als Treibmittel für Motoren, als Oxidationsmittel oder für Elektronikzwecke, wie Herstellung von Lösungen zur Behandlung von elektronischen Bauteilen verwenden. Bei Bedarf kann das höchstkonzentrierte und höchstreine H₂O₂ auch mit einem oder mehreren auf die spezielle Anwendung gerichteten Hilfsstoffen oder/und an sich bekannten Stabilisatoren oder einer Stabilisatorkombination in wirksamer Einsatzmenge versetzt werden. Als Stabilisatoren kommen beispielsweise Zinnverbindungen, Phosphate, Di- und Triphosphate, Phosphonate und Radikalfänger infrage. Die durch das erfindungsgemäße Verfahren erhältliche höchste Reinheit des H₂O₂-Produkts ist somit ein Weg, eine im H₂O₂-Edukt enthaltende Stabilisatorkombination im H₂O₂-Produkt gegen andere Hilfs-/Wirkstoffe auszutauschen.

Das Grundprinzip des erfindungsgemäßen Verfahrens umfasst die Erzeugung einer Kristallsuspension in einem beliebigen ein- oder mehrstufigen Kristallisator, wobei die Kühlung über Apparatewände oder Verdampfung im Vakuum erfolgt, eine sich anschließende Fest-Flüssig-Trennung, eine Gegenstromwäsche der Kristalle und Aufschmelzen der konzentrierten und gereinigten Kristalle.

Beispiele geeigneter Kristallisatoren sind: Rührkesselkristallisator, Kratzkristallisator, Kühlscheibenkristallisator, Kristallisierschnecke, Trommelkristallisator, Rohrbündelkristallisator. Für die Fest-Flüssig-Trennung eignen sich übliche Vorrichtungen, wie Filter und Zentrifugen, wobei die Suspension zuvor auch mittels eines Hydrozyklons eingedickt werden kann. Vorzugsweise erfolgen die Trennung und Wäsche in einem einzigen Apparat, etwa in einer hydraulischen oder mechanischen Waschkolonne mit einem gepacktem Kristallbett.

Bei einem vorzugsweise zu verwendenden Kratzkühler oder Kratzkristaller handelt es sich um einen über die Außenwand gekühlten Behälter bzw. Kühlscheiben enthaltenden Behälter, in welchem das zu konzentrierende wässrige Wasserstoffperoxid soweit unterkühlt wird, dass Wasserstoffperoxidkristalle an der Innenseite bzw. an den Kühlscheiben auskristallisieren und durch Umlaufen eines Schabers oder Messers unter Bildung von einzelnen Kristallen oder Schuppen abgenommen werden können. Die Kristalle werden durch geeignete Maßnahmen, wie Rühren, in Suspension gehalten. Erfindungsgemäß wird dem Kristaller Wasserstoffperoxid der Konzentration c_{E} kontinuierlich zugeführt; die gebildete Kristallsuspension wird kontinuierlich der kombinierten Fest-Flüssig-Trennung und Gegenstromwäsche dienenden hydraulischen oder mechanischen Waschkolonne zugeführt.

Überraschenderweise muss bei Verwendung eines Kratzkristallers oder auf vergleichbarem Prinzip beruhenden anderen Kristallisatoren nur minimal unter die Gleichgewichtstemperatur abgekühlt werden, um Kristallkeime zu bilden. Eine Abkühlung im Bereich von größer 0 bis 5 K, insbesondere 0,5 bis 3 K unter die Gleichgewichtstemperatur ist gut geeignet. Entgegen dem bisher bekannten Stand der Technik (siehe Schumb, Seite 219) bedarf es bei der Verwendung eines Kratzkristallers oder äquivalent wirkenden Kristallisatoren keiner nennenswerten Unterkühlung und keiner Zugabe von Impfkristallen, wodurch eine effizientere Konzentrierung und Reinigung möglich wird. Um im Anschluss an die Kristallkeimbildung ein ausreichendes Kristallwachstum und damit eine für die Fest-Flüssig-Trennung mit nachgeschalteter Wäsche geeignete Suspensionsdichte zu erzielen, wird auf die hierfür erforderliche Temperatur gemäß Phasendiagramm abgekühlt.

Die aus dem Kristaller entnommene Suspension wird gemäß einer besonders bevorzugten Ausführungsform kontinuierlich in einen Apparat zur Fest-Flüssig-Trennung geführt, der gleichzeitig als Waschkolonne betrieben wird. Im Gegensatz zu der im Stand der Technik zur Konzentrierung von Wasserstoffperoxid beschriebenen Rektifizierkolonne, die für eine technische Anlage als Gravitationskolonne-Waschkolonne ausgebildet werden müsste, lassen sich durch Verwendung einer hydraulischen oder mechanischen Waschkolonne die bei der Gravitationskolonne auftretenden Nachteile, darunter eine unkalkulierbare Rückvermischung, beim scale-up vermeiden. In einer erfindungsgemäß zu verwendenden hydraulischen oder mechanischen Waschkolonne werden die Kristalle durch hydraulische bzw. mechanische Kräfte in axialer Richtung gefördert, so dass ein dichtgepacktes Kristallbett entsteht.

Bei einer üblichen Ausführungsform einer hydraulischen Waschkolonne wird die Suspension im oberen Teil der Kolonne aufgegeben; die flüssige Phase (Mutterlauge) wird über ein Filter aus der Kolonne abgezogen, wodurch sich ein dichtgepacktes Kristallbett bildet. Das Kristallbett wird von der flüssigen Phase in Richtung des Bodens der Kolonne durchströmt und durch den Strömungswiderstand nach unten gedrückt. Am Boden der Kolonne befindet sich eine rotierende Kratzvorrichtung, die aus dem dichtgepackten Kristallbett und der am unteren Teil der Waschkolonne eingebrachten Waschschmelze wieder eine Suspension erzeugt. Diese Suspension wird durch einen Wärmetauscher gepumpt und aufgeschmolzen. Ein Teil der Schmelze dient als Waschschmelze; diese wird in die Kolonne zurückgepumpt und wäscht das in entgegengesetzter Richtung wandernde Kristallbett aus. Die Waschschmelze bewirkt einerseits ein Waschen der Kristalle, andererseits kristallisiert die Schmelze auf den Kristallen aus. Die freiwerdende Kristallisationsenthalphie erwärmt das Kristallbett im Waschbereich der Kolonne.

Bei einer mechanischen Waschkolonne - beispielhaft wird auf die EP 0 193 226 B und NL 1007687 A verwiesen - wird ein dichtes Kristallbett innerhalb der Kolonne mittels eines für die Schmelze durchlässigen Kolbens erzeugt. Der Kolben kann sich am oberen oder unteren Ende der Kolonne befinden; im ersten Fall erfolgt der Zulauf der Suspension im oberen Bereich der Kolonne, im zweiten Fall im mittleren oder unteren Bereich. Der Kolben ist für die Schmelze durchlässig, so dass beim Komprimieren Schmelze an der Rückseite des Kolbens austritt und dort abgezogen wird. Analog wie eine hydraulische Waschkolonne enthält auch die mechanische Waschkolonne eine Vorrichtung zum Abkratzen, beispielsweise ein rotierendes Kratzorgan, um Kristalle aus dem Kristallbett abzukratzen und mit der Waschschmelze in eine Suspension zu überführen. Die Waschschmelze bewegt sich im Gegenstrom zum Kristallbett. Von der dem Kolben gegenüberliegenden Seite der Waschkolonne wird Suspension abgezogen, und nach dem Aufschmelzen wird ein Teil der Schmelze als Waschschmelze zurückgeführt und der andere Teil als Reinstprodukt aus dem Kreislauf abgezogen.

Geeignete, in der Fachwelt für andere Zwecke als die Konzentrierung von H₂O₂ genutzte Apparate bzw. Verfahren zur Schmelzkristallisation unter Einsatz einer mechanischen oder hydraulischen Waschkolonne sind die sogenannte Phillips-Pulsationskolonne, Phillips-Druckkolonne, Brennan-Koppers-Verfahren, Niro-Grenco-Gefrierkonzentration und das TNO-Verfahren. Ausführungsformen zur Suspensionskristallisation mit nachgeschalteter Wäsche der Kristalle in einer hydraulischen oder mechanischen Waschkolonne sind dem Buch "Melt Crystallization Technology" von G.F. Arkenbout, Technomic Publishing Co. Inc., Lancaster-Basel (1995), S. 265-288 sowie dem sich auf die Niro-Gefrierkonzentration zur Abwasservorkonzentrierung richtenden Artikel in Chemie Ingenieur Technik (72) (10/2000), 1231-1233 zu entnehmen.

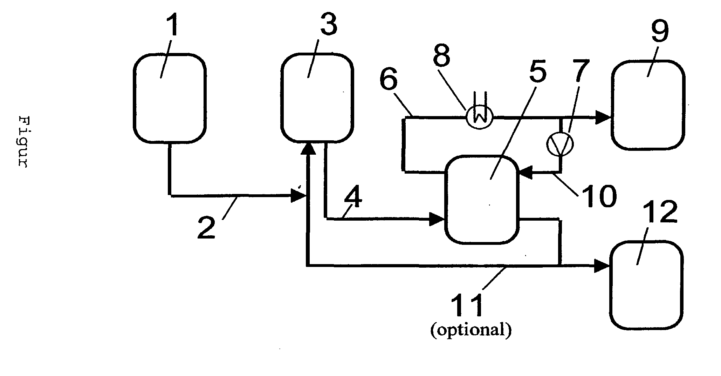

Die Figur zeigt ein Verfahrensschema, bei welchem das Verfahren zusammenfassend beschrieben wird:

Aus dem Vorratsbehälter 1 wird das zu kristallisierende Edukt in flüssigem Zustand, also knapp über dem Gleichgewicht temperiert über den Zulauf 2 in den Suspensionserzeuger, vorzugsweise einen Kratzkühler, geführt. Durch Kühlung des Edukts unter die Gleichgewichtstemperatur entstehen im Suspensionserzeuger zunächst Kristallkeime und durch weitere Abkühlung nimmt die Suspensionsdichte kontinuierlich zu. Die Suspensionsdichte liegt im allgemeinen im Bereich von 5 und 80 %, vorzugsweise 20 bis 50 % und besonders bevorzugt 20 bis 30 %. Die Suspension wird kontinuierlich über den Zulauf 4 in eine mechanische Waschkolonne 5 geführt und dort über eine bewegte Filtervorrichtung in eine flüssige und eine feste Phase getrennt. Das Filtrat verlässt die Waschkolonne und wird dem Mutterlaugenbehälter 12 kontinuierlich zugeführt. Zur Ausbeutesteigerung ist es vorteilhaft, einen Teil des Filtrats über die Mutterlaugenrückführung 11 in den Suspensionserzeuger 3 zurückzuführen. Die Kristalle in der Waschkolonne werden zu einem Kristallbett verdichtet und je nach Typ der Waschkolonne oben oder unten mit umlaufenden Messern abgeschabt. Die abgeschabten Produktkristalle werden als Suspension im Produktkreislauf 6 mit der Kreislaufpumpe 7 umgepumpt und schmelzen durch das Einbringen der Schmelzenthalphie mittels eines Wärmetauschers 8 auf. Ein Teil aus dem Kreislauf 6 wird als Waschflüssigkeit über Leitung 10 zur Gegenstromwäsche in die Waschkolonne zurückgeführt, der andere Teil wird in den Produktbehälter 9 geleitet.

Obgleich eine Kombination aus einem Kratzkristaller und einer mechanischen Waschkolonne zur Herstellung organischer Substanzen mit hoher Reinheit bekannt ist, war nicht vorhersehbar, dass dieses Verfahren auch zur Konzentrierung von wässrigem Wasserstoffperoxid, das selbst mit Wasser Mischkristalle bildet, zwecks Gewinnung von höchstkonzentriertem und besonders reinem Wasserstoffperoxid sehr gut geeignet ist. Im Hinblick auf die Stoffeigenschaften von konzentriertem Wasserstoffperoxid, welche aus dem Phasendiagramm des zuvor gewürdigten Dokuments Schumb hervorgehen, war nicht zu erwarten, dass in einer Stufe eine Konzentrierung im Bereich um/über 10 % realisiert werden konnte. Wie zuvor ausgeführt, war auch nicht zu erwarten, dass nicht nur über 98 gew.-%iges, sondern auch gleich/größer 99,9 gew.-%iges H₂O₂, d.h. im wesentlichen 100 gew.-%iges H₂O₂ erhältlich ist. Überraschend war ferner, dass der Gehalt an Verunreinigungen, wie organischem Kohlenstoff, Phosphat und Schwermetalle, durch das erfindungsgemäße Verfahren auf Werte unterhalb der Nachweisgrenze sinkt.

### Beispiele

1. In einer Vorrichtung entsprechend der Figur mit einem Kratzkristaller zur Suspensionserzeugung und einer mechanischen Waschkolonne mit unten angeordnetem Kolben und oben angeordnetem Abzug der gereinigten Schmelze wurde wässriges Wasserstoffperoxid mit einer Konzentration c_{E} = 89,7 Gew.-% eingesetzt. Das Edukt wurde etwa 3 K unter die Gleichgewichtstemperatur von -12,2 °C abgekühlt. Überraschenderweise kam es ohne Zugabe von Impfkristallen zur Kristallisation. Durch weitere Abkühlung auf -21 °C wurde weiter kristallisiert, wobei die Suspensionsdichte zunahm. Die aus dem Kristaller abgezogene Kristallsuspension wurde in der Waschkolonne zu einem kompakten Kristallbett verdichtet. An der Oberseite des Kristallbetts wurde dieses mittels eines rotierenden Schabers abgeschabt und bildeten mit der in diesem Bereich zugeführten Waschschmelze, also Wasserstoffperoxid der Konzentration c_{P} eine Kristallsuspension, welche im Produktkreislauf aufgeschmolzen wurde und wovon ein Teil zur Gegenstromwäsche in das Kristallbett zurückgeführt wurde. Erhalten wurde Wasserstoffperoxid mit einer Konzentration von im wesentlichen 100 Gew.-%. Der TOC-Gehalt wurde von ca. 40 mg/kg im Edukt auf weniger als 4 mg/l im Produkt abgereichert. Auch der Sn-, Ni-, Nitrat und Phosphatgehalt lagen im H₂O₂-Produkt unter der jeweiligen Nachweisgrenze, welche hier bei <0,02 mg Sn/1, <1 mg Ni/l und <2 mg Phosphat/l lag.
2. Unter Einsatz eines wässrigen Wasserstoffperoxids mit einem Gehalt von 87,5 Gew.-%, einer Unterkühlung zwecks Keimbildung auf -16 °C und weiteren Abkühlung auf -26 °C zwecks Erzielung einer ausreichenden Suspensionsdichte und Fest-Flüssig-Trennung und Wäsche in der auch in Beispiel 1 verwendeten mechanischen Waschkolonne wurden identische Ergebnisse erzielt.

## Patentansprüche

1. Verfahren zur kontinuierlichen Herstellung von höchstkonzentriertem Wasserstoffperoxid der Konzentration c_{P} aus wässrigem Wasserstoffperoxid der Konzentration c_{E}, wobei c_{E} mindestens 80 Gew.-% beträgt und c_{P} größer als c_{E} ist, umfassend eine Suspensionskristallisation des wässrigen Wasserstoffperoxids der Konzentration c_{E} und eine Nachbehandlung der in der Suspension enthaltenden Wasserstoffperoxidkristalle,
**dadurch gekennzeichnet,**
**dass** man die Nachbehandlung als Gegenstromwäsche in einer hydraulischen oder mechanischen Waschkolonne mit einem gepackten Kristallbett durchführt und als Waschmedium Wasserstoffperoxidschmelze der Konzentration c_{P} einsetzt.

2. Verfahren nach Anspruch 1,
**dadurch gekennzeichnet,**
**dass** man wässriges Wasserstoffperoxid der Konzentration c_{E} im Bereich von 85 bis 95 Gew.-%, insbesondere 88 bis 92 Gew.-%, einstufig auf eine Konzentration c_{P} von über 98 Gew.-%, insbesondere gleich oder größer 99,9 Gew.-%, konzentriert.

3. Verfahren nach Anspruch 1 oder 2,
**dadurch gekennzeichnet,**
**dass** man die Suspensionskristallisation in einem ein- oder mehrstufigen Kratzkristallisator durchführt.

4. Verfahren nach einem der Ansprüche 1 bis 3,
**dadurch gekennzeichnet,**
**dass** man die Suspensionskristallisation in einem Kratzkristallisator, die mit einer Fest-Flüssig-Trennung der Suspension kombinierte Gegenstromwäsche der Kristalle in einer mechanischen Waschkolonne durchführt und einen Teil der aus der Waschkolonne austretenden Mutterlauge in den Kratzkristallisator zurückführt.

5. Verfahren nach Anspruch 3 oder 4,
**dadurch gekennzeichnet,**
**dass** man die Keimbildung bei der Suspensionskristallisation bei einer Temperatur im Bereich von größer 0 bis 5 K, insbesondere 0,5 bis 3 K, unterhalb der Gleichgewichtstemperatur des H₂O₂-Edukts durchführt und anschließend die Temperatur weiter absenkt, bis eine Suspensionsdichte im Bereich von 5 bis 80 % erreicht ist.

6. Verfahren nach einem der Ansprüche 1 bis 5,
**dadurch gekennzeichnet,**
**dass** man die Suspensionskristallisation bis zu einer Suspensionsdichte im Bereich von 20 bis 50 %, insbesondere 20 bis 30 %, durchführt.

7. Verfahren nach einem der Ansprüche 1 bis 6,
**dadurch gekennzeichnet,**
**dass** man aus der Waschkolonne als Schmelze austretendes Wasserstoffperoxid einer Konzentration c_{P} von mindestens 98 Gew.-%, vorzugsweise mindestens 99,9 Gew.-%, mit einem oder mehreren Stabilisatoren, insbesondere Stabilisatoren aus der Reihe der Zinnverbindungen, Phosphate, Di- und Triphosphate, Phosphonate und Radikalfänger, in wirksamer Menge stabilisiert.

8. Wasserstoffperoxid mit einer Konzentration von 99,9 bis 100 Gew.-% und einem Gehalt an TOC, Nitrat, Phosphat, Nickel und Zinn von jeweils weniger als 4 mg/l, vorzugsweise weniger als 1 mg Ni/l, weniger als 1 mg Sn/l und weniger als 2 mg Phosphat/l.

9. Verwendung des Wasserstoffperoxids gemäß Anspruch 8 als Oxidationsmittel für Motoren oder zur Behandlung von elektronischen Bauteilen.
